# EUROPEAN PATENT APPLICATION

(11) **EP 2 000 653 A1**
(43) Date of publication of application: **10.12.2008**
(21) Application number: 07252264.2
(22) Date of filing: 05.06.2007
(51) Int. Cl.: F02D 41/00, F01N 3/10

(54) **Method of operating a compression ignition engine**

(71) Applicant: Delphi Technologies, Inc., Troy, Michigan 48007 (US)
(72) Inventor: Schreurs, Bart, 6700 Waltzing (BE)
(74) Representative: Murgitroyd, Ian George

(57) **Abstract**

A method of operating a compression ignition engine comprising, in a first mode, at low engine loads, operating the engine at high EGR rates under normal diesel combustion to reduce NOx emissions, in a second mode, at medium to high engine loads, operating the engine under stoichiometric conditions whereby NOx emissions can be effectively reduced by means of a three way catalyst provided in the exhaust system and, in a third mode under very high engine loads and/or high engine speeds, operating the engine under normal diesel combustion and low EGR to obtain maximum torque.

## Description

Due to chemical reactions and the incomplete combustion of fuel in the combustion chamber of an internal combustion engine, the gases emitted from the exhaust system of the engine may contain a number of hazardous substances which can lead to air pollution problems that may be detrimental to health and the environment.

An ever increasing number of vehicles has resulted in increasing air pollution, particularly in urban areas. Therefore, a series of ever stricter emission standards have been imposed to mitigate these pollution problems.

The main pollutants of concern are hydrocarbons (HC), carbon monoxide (CO), oxides of nitrogen (NOₓ) and particulates (i.e. soot).

In order to reduce the emissions of HC, CO and NOₓ from gasoline fuelled spark ignition (SI) engined vehicles, three way catalytic converters have been widely implemented, such three way catalytic devices incorporating a reduction catalyst, to reduce NOₓ to N₂ and O₂, and an oxidation catalyst, to oxidise CO to CO₂ and HC to H2O and CO₂. However, for correct operation of a three way catalyst, the vehicle engine must be controlled to operate stoichiometrically where the amount of oxygen supplied to the combustion chamber corresponds to that required for complete combustion of the amount of fuel supplied. For gasoline, this corresponds to an air/fuel ratio of 14.7 parts air to 1 part fuel.

When there is more air, and hence oxygen, than required, then the system is said to be running lean, and the system is in oxidizing condition. In that case, the converter's two oxidizing reactions (oxidation of CO and HC) are favoured, at the expense of the reducing reaction. When there is excessive fuel, then the engine is running rich. The reduction of NOₓ is favoured, at the expense of CO and HC oxidation. If an engine could be held at the strict stoichiometric point for the fuel used, it is theoretically possible to reach 100% conversion efficiencies.

Unlike spark ignition gasoline fuelled engines, diesel fuelled compression ignition engines are normally operated under lean conditions with excess air (lambda > 1). Thus, while an oxidation catalyst can be used to oxidise CO to CO₂ and HC to H₂O and CO₂, excess oxygen in the exhaust gases due to the lean burn conditions normally prevents reduction of NOₓ to N₂ and O₂ and thus prevents the use of a three way catalyst.

The big challenge for future diesel emissions is the reduction of NOₓ emissions. Two approaches are currently pursued to achieve this objective, either separately or in combination:-

The first approach involves reducing the production of NOₓ in the combustion chamber by using high levels of exhaust gas recirculation (EGR).

Generally diesel engines operate with excess air and thus can operate with EGR rates over 50% (especially at idle, where there is otherwise a very large amount of excess air). EGR works by recirculating a portion of an engine's exhaust gas back into the combustion chambers. Intermixing the incoming air with recirculated exhaust gas dilutes the mix with inert gas, lowering the adiabatic flame temperature and reducing the amount of excess oxygen. The exhaust gas also increases the specific heat capacity of the mix lowering the peak combustion temperature. Because NOₓ formation progresses much faster at high temperatures, EGR serves to limit the generation of NOₓ.

However, it is very difficult to obtain extremely high EGR rates at medium to high engine loads. Thus for these operating conditions it is not easy to get low engine-out NOₓ emissions. This is a particular problem during the acceleration phases of the emissions test.

The second approach is to use after-treatment of the exhaust gases to remove the NOₓ.

Selective catalytic reduction (SCR) can be used to reduce the NOₓ, wherein a gaseous or liquid reductant (most commonly ammonia or urea) is added to the exhaust gas stream and is absorbed onto a catalyst. The reductant reacts with NOₓ in the exhaust gas to form H₂O (water vapour) and N₂ (nitrogen gas). However, SCR is very sensitive to fuel contaminants, operates in a limited (high) temperature operation window and is costly.

Another method of exhaust after-treatment to remove the NOₓ is the use of a lean NOₓ trap. This requires rich regeneration phases (increased fuel consumption), has a limited temperature operation window and is again costly and prone to failure due to fuel contamination, in particular sulphur.

According to the present invention there is provided a method of operating a compression ignition engine comprising controlling the flow rate of air into one or more combustion chambers of the engine and/or the injection of fuel into said one or more combustion chambers to provide stoichiometric combustion of fuel over a predetermined range of engine load and providing a three way catalytic converter in the exhaust system of the engine for reducing NOₓ over said predetermined range of engine load.

Preferably the method includes the further step of supplying a high rate of EGR to the engine when the engine load is below said predetermined range of engine load to reduce NOₓ emissions. Preferably such high rate of EGR comprises 50% or more EGR to fresh air by volume.

Thus the NOₓ emissions can be reduced under low engine loads by very high EGR rates and can be reduced at medium to high engine loads, where very high EGR rates are not possible, by operating the engine under stoichiometric conditions and using a three way catalyst.

Preferably said method of providing stoichiometric combustion comprises controlling the EGR rate to achieve a stoichiometric air/fuel mixture (lambda 1) within the combustion chamber(s) of the engine. This minimises pumping losses and the fuel economy impact of stoichiometric operation.

In a typical diesel engine that is calibrated towards Euro 5 emission standards, more than 60% of the NOx emissions are produced during the acceleration phases of the emission test. It is in these area's that the engine could be operated stoichiometrically using the method of the present invention.

The range of engine load where the engine has to be operated stoichiometrically would depend upon the obtainable EGR rates at different engine loads and thus can be determined empirically for a particular application.

At very high engine loads, where sudden acceleration is required, a further operating mode could be provided where the engine is returned to a lean burn mode and fuel is supplied as required to obtain maximum torque. NOx emissions would increase in such further mode, but such would only be a transient mode required to improve driveability.

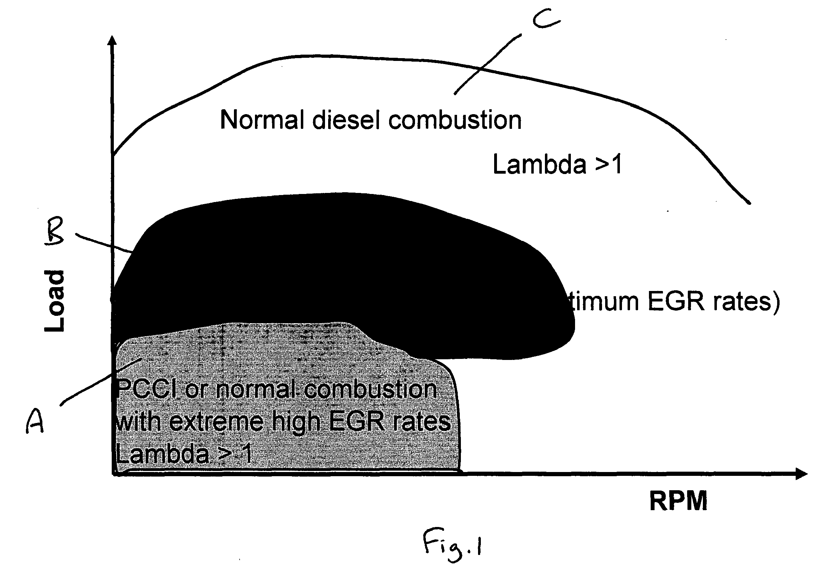

Fig. 1 illustrates, by way of example only, a graph of engine load against engine speed showing a method of operating a diesel engine in accordance with an embodiment of the present invention.

In a first or low load mode labelled A, the engine is operated at very high EGR rates (>50%) under normal diesel combustion or premixed combustion (i.e. lean burn conditions lambda >1) to reduce NOx emissions when the engine is under low load.

In a second mode, at medium to high load, the engine is operated under stoichiometric conditions whereby NOx emissions can be effectively reduced by means of a three way catalyst provided in the exhaust system.

In a third mode, under very high engine load and/or high engine speeds, the engine is operated under normal diesel combustion and low EGR to obtain maximum torque.

In the first mode, corresponding to the load area where the engine can be operated with extremely high EGR rates (>50%), especially in PCCl mode, the engine-out NOx emissions are so low (<15 PPM) that no aftertreatment is necessary. Therefore the engine does not need to be operated at lambda 1 in this low load area.

At higher loads, there is no easy and practical way to get extremely high EGR rates (except with special boost concepts such as twin stage turbos or a mechanical compressor). Therefore the engine-out NOx emissions will be too high to achieve to the ultra low NOx targets.

By operating the engine stoichiometrically in the second mode, very high NOx conversion efficiencies can be achieved within the 3-way catalyst (>95%).

In the low load area the diesel engine has typically very low exhaust gas temperatures. The 3-way catalyst needs a minimum temperature to give optimum conversion efficiency. But inherent to the higher operating load area (second mode), there will be enough exhaust temperature available to make the catalyst effective in the lambda 1 range.

With the method of the present invention, the need to use EGR coolers becomes obsolete. An EGR cooler is typically used to achieve higher EGR rates in the upper load area. In the low load area such coolers are normally bypassed to obtain better combustion stability with the higher EGR rates. In the higher load operation, since the engine is operated at lambda 1 and the converter efficiency is more than 95%, there is no need to get extremely low engine-out emissions. The target here is to minimize the fuel consumption impact. Higher intake temperatures lead typically to lower fuel consumption and less EGR rate is needed to get to the lambda 1 air requirements (lower density of the intake charge).

Various modifications and variations to the described embodiment of the invention will be apparent to those skilled in the art without departing from the scope of the invention as defined in the appended claims. Although the invention has been described in connection with a specific preferred embodiment, it should be understood that the invention as claimed should not be unduly limited to such specific embodiment.

## Claims

1. A method of operating a compression ignition engine comprising controlling the flow rate of air into one or more combustion chambers of the engine and/or the injection of fuel into said one or more combustion chambers to provide stoichiometric combustion of fuel over a predetermined range of engine load and providing a three way catalytic converter in the exhaust system of the engine for reducing NOₓ over said predetermined range of engine load.

2. A method of operating an engine as claimed in claim 1, wherein the method includes the further step of operating the engine in a lean burn mode and supplying a high rate of EGR to the engine when the engine load is below said predetermined range of engine load to reduce NOₓ emissions.

3. A method of operating an engine as claimed in claim 2, wherein such high rate of EGR comprises approximately 50% or more EGR to fresh air by volume.

4. A method of operating an engine as claimed in any preceding claim, wherein said method of providing stoichiometric combustion comprises controlling the EGR rate to achieve a stoichiometric air/fuel mixture (lambda 1) within said one or more combustion chambers of the engine.

5. A method of operating an engine as claimed in any preceding claim, wherein, at engine loads above said predetermined range of engine load, the engine is operated in a lean burn mode whereby fuel is supplied as required to obtain a required torque.

6. A method of operating a compression ignition engine comprising, in a first mode, at low engine loads, operating the engine at high EGR rates under normal diesel combustion to reduce NOx emissions, in a second mode, at medium to high engine loads, operating the engine under stoichiometric conditions whereby NOx emissions can be effectively reduced by means of a three way catalyst provided in the exhaust system and, in a third mode under very high engine loads and/or high engine speeds, operating the engine under normal diesel combustion and low or no EGR to obtain maximum torque.
